# EUROPEAN PATENT APPLICATION

(11) **EP 1 085 226 A1**
(43) Date of publication of application: **21.03.2001**
(21) Application number: 00203193.8
(22) Date of filing: 14.09.2000
(51) Int. Cl.: F16D 3/202

(54) **Mechanical joint for variable angle power transmission**

(30) Priority: 20.09.1999 IT MN990039
(71) Applicant: Torreggiani, Marco, 46029 Suzzara (Mantova) (IT); Torreggiani, Elisa, 46029 Suzzara (Mantova) (IT)
(72) Inventor: Torreggiani, Marco, 46029 Suzzara (Mantova) (IT); Torreggiani, Elisa, 46029 Suzzara (Mantova) (IT)
(74) Representative: Corradini, Corrado

(57) **Abstract**

The joint comprises a first shaft 11 and a second shaft 12 the axes (A and B) of which intersect at the geometrical centre (C) of the joint. Two joint parts 20 and 30 are provided, rigidly connected to a respective shaft 11, 12 and coupled together in such a manner as to define a ball joint with its centre at the point of intersection (C) of the axes (A, B) of the two shafts 11, 12, to enable one shaft to swivel relative to the other. In that surface of one of the two joint parts which faces the other part there is provided at least one groove having its longitudinal axis extending in a plane passing through the axis (B, A) of the shaft 12, 11 to which the joint part 30, 20 is connected. At least one pin 16 is carried and rigidly rotated by the other 20, 30 of the two joint parts 20, 30 and engages said groove 15 to oblige the two shafts (A, B) to rotate together. The pin 16 is able to slide longitudinally within the groove 15, the joint parts 20, 30 being able to swivel one relative to the other about the axis (P) of the pin 16. Preferably, the joint comprises two said pins 16 aligned along the same axis (P) passing through the centre (C) of the joint and engaging two respective grooves 15 positioned in the same axial plane.

## Description

This invention relates to a mechanical joint for power transmission between two shafts, the axes of which intersect at the geometrical centre of the joint with a variable angle between them.

In most of its applications the invention replaces the classical universal joint.

Typical applications include agricultural machines, for transmitting a drive torque between the power take-off of an agricultural tractor and an implement. Other applications include industrial machines.

An object of the invention is to improve the performance of known mechanical joints, and in particular the universal joint.

A further object of the invention is to provide a constructionally simpler means able to better support forces and wear than a universal joint.

These and other objects are attained by the joint of the invention as characterised in the claims.

The invention is based on the fact of comprising:
two joint parts rigidly connected to a respective shaft and coupled together in such a manner as to define a ball joint with its centre at the point of intersection of the axes of the two shafts, to enable one shaft to swivel relative to the other;
at least one groove provided in that surface of one of the two joint parts which faces the other part, and having its longitudinal axis extending in a plane passing through the axis of the shaft to which the joint part is connected;
at least one pin carried and rigidly rotated by the other of the two joint parts and engaging said groove to oblige the two shafts to rotate together;
said pin being able to slide longitudinally within the groove, and said joint parts being able to swivel one relative to the other about the pin axis.

In a preferred (but not exclusive) embodiment, the joint comprises two said pins aligned along the same axis passing through the centre of the joint and engaging two respective grooves positioned in the same axial plane.

Compared with universal joints, the joint of the invention enables the following benefits to be obtained:
- high powers (exceeding 200 kW) can be transmitted with greater rotational speed, and with greater angles of inclination between the shafts (up to 40 degrees);
- the behaviour of the joint is substantially homokinetic, consequently enabling operation at higher speeds, and elimination of unbalance and irregularity in motion transmission, with consequent lesser mechanical stressing of the joint components and a much longer life of the joint and of the means driven by the joint;
- the joint can be designed for permanent lubrication.

The invention is described in detail hereinafter with the aid of the accompanying figures, which illustrate a non-exclusive embodiment thereof.
Figure 1 is a schematic axial section through a first embodiment of the invention.
Figure 2 is a view of the component 20b of the bell structure of Figure 1 taken in the direction II-II thereof.
Figure 3 is a view of the other component 20a of the bell structure of Figure 1 taken in the direction III-III thereof.
Figure 4 is a side view of the spherical component of Figure 1.
Figure 5 is a side view of the pins 16 of Figure 1.
Figure 6 is an axial section on the plane VI-VI of Figure 7 showing details of a constructional form of the first embodiment of the invention.
Figure 7 is a section on the plane VII-VII of Figure 6.
Figure 8 is a schematic axial section through a second embodiment of the invention.
Figure 9 is a section on the plane IX-IX of Figure 8.

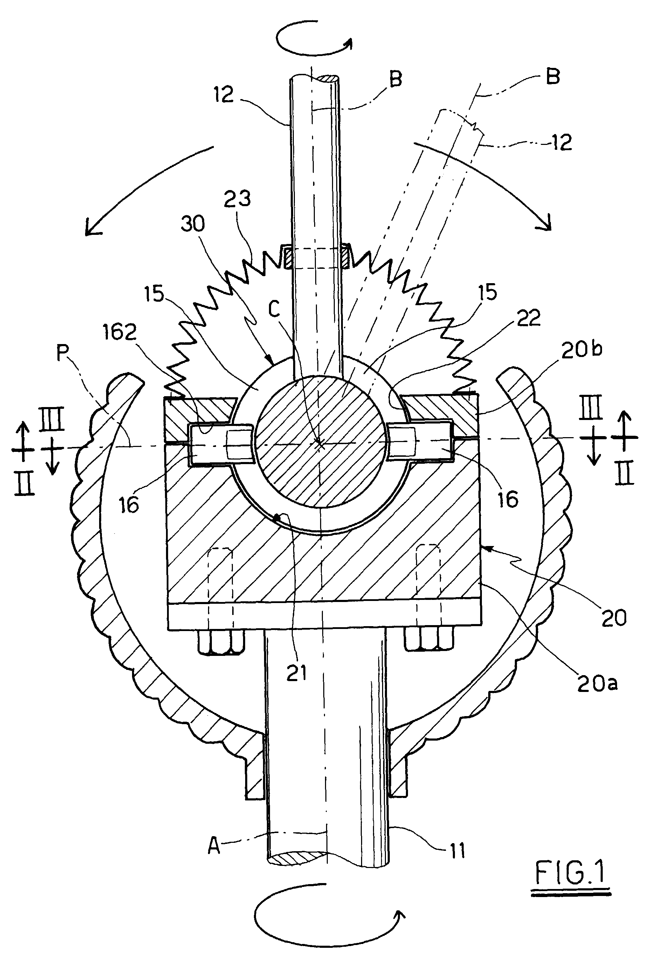

A first embodiment of the invention is shown in schematic form in Figure 1. In it, the reference numeral 11 indicates a first shaft of axis A and 12 a second shaft of axis B, the axes A and B intersecting at a point C at the geometrical centre of the joint.

The joint comprises two joint parts 20 and 30, connected rigidly to a respective shaft 11, 12 (the shaft 11 is connected to the part 20 and the shaft 12 is connected to the part 30) and coupled together in such a manner as to define a ball joint having its centre at the point of intersection C of the axes A and B of the two shafts 11 and 12, to enable one shaft to swivel relative to the other.

Specifically, the part 30 consists of a spherical component connected rigidly to the shaft 12, the part 20 consisting of a bell structure connected rigidly to the other shaft 11 and having a hollow seat 21 to engage the outer surface of the spherical component 30 in such a manner as to define said ball joint.

The geometrical centre of the spherical surface of the spherical component 30 defines said centre C of the joint.

In one of the joint parts (the spherical component 30 in this embodiment) there is provided in that surface thereof facing the other part 20 (ie its outer surface) at least one groove 15, the longitudinal axis of which extends in a plane passing through the axis B of the shaft 12 to which the part 30 is connected. The central point of the longitudinal axis of the groove lies in a plane perpendicular to the axis B of the shaft 12.

Two grooves 15 are preferably provided, positioned in the same plane passing through the axis B of the shaft 12.

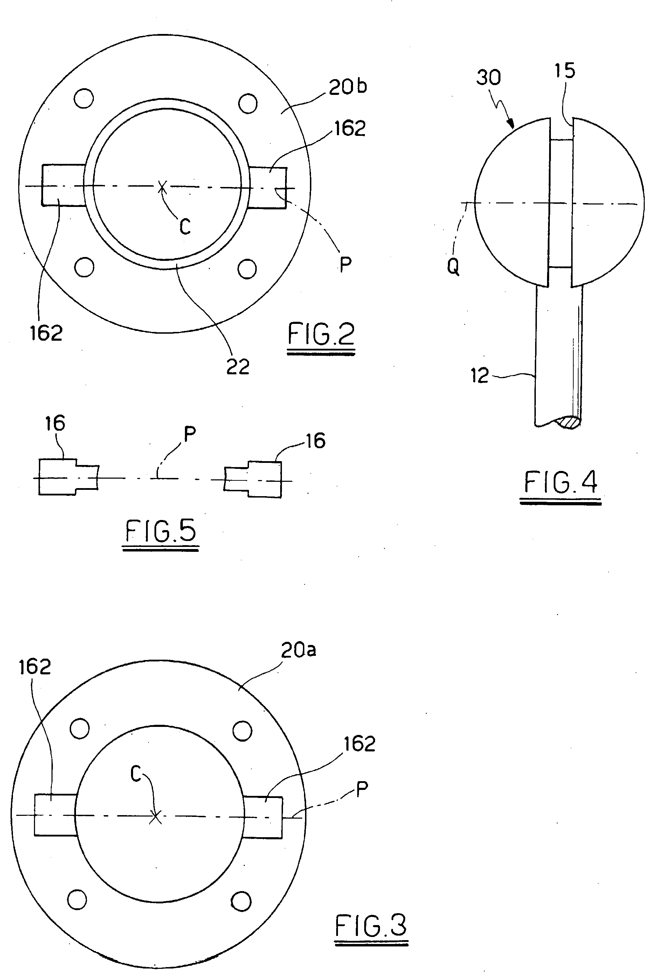

There is also provided at least one pin 16, carried by and rotating rigidly with one of the two joint parts (namely the bell structure 20), to engage in said groove 15 so that the two shafts 11 and 12 are obliged to rotate together about their respective axes A and B. The axis P of the pin 16 passes through the centre of the joint and is perpendicular to the axis A of the shaft 11 connected to the relative joint part 20. The pin 16 is able to slide longitudinally within the groove, so making it possible for the joint part 20 to swivel relative to the other joint part 30 about an axis Q passing through the centre C and perpendicular to the axial plane in which the grooves 15 lie (see Figure 4).

The joint parts 20 and 30 are also able to swivel relative to each other about the axis P of the pin 16.

Preferably, two pins 16 are provided aligned along the axis P passing through the centre C of the joint, to engage in respective grooves 15.

Each pin 16 comprises a first portion 16' inserted as an exact fit into a corresponding seat 162 provided in the respective joint part 20. The outer surface of said first portion 16' is a surface of revolution having its axis P passing through the centre C of the joint.

In operation, on rotating one of the shafts, for example the shaft 11 (drive shaft), the pins 16 are caused to rotate rigidly with it, and as these are engaged in the axial grooves 15 they rotate the spherical component 30 and with it the shaft 12 (driven shaft).

The axis B of the shaft 12 can be inclined at an angle to the axis A of the shaft 11, the axes A and B intersecting at the point C (as shown by dashed and dotted lines in Figure 1). In this case, during rotation of the shaft 11 about its axis A, the shaft 12 rotates about its axis B, which maintains its spatial position. This is enabled in that the spherical component 30 can swivel relative to the bell structure 20 both about the axis P of the pins 16 and about the axis Q. Besides rotating about the axis A, the pins 16 also slide along the grooves 15 to an extent corresponding to the inclination angle between the axes A and B.

Consequently, during rotation of the shaft 11, the pins 16 constantly engage the respective grooves 15 to transmit to them the torque which they receive from the shaft 11, the spherical component 30 in its turn transmitting this torque to the shaft 12.

The cavity of the bell structure 20 has a mouth 22 which is centered on the axis A of the shaft 11 connected to the bell structure, and through which the shaft 12 passes. The width of the mouth 22 is such as to enable the axis B to undergo the desired inclination relative to A. The mouth 22 is closed by an elastic cover 23 in the form of an elastomeric bellows, which is connected both to the bell structure 20 and to the shaft 12, and is able to vary its shape to adapt to different angles of inclination. The bell structure 20 consists of two parts 20a and 20b connected together along the equatorial plane of the joint.

The entire space enclosed within the cavity of the bell structure 20 and closed by the bellows cover 23 is advantageously filled with lubricant grease covering all the surfaces involved in the mutual sliding movements of the joint.

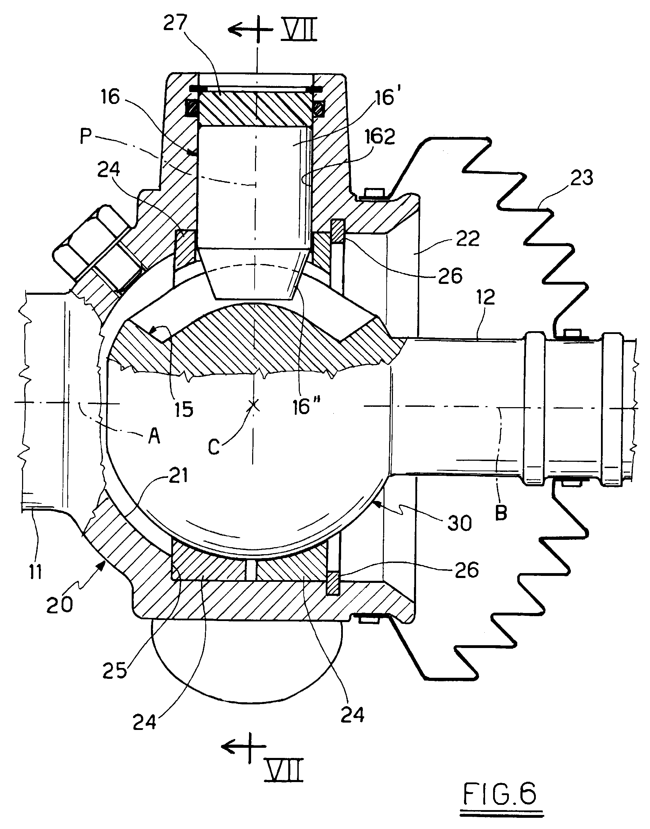

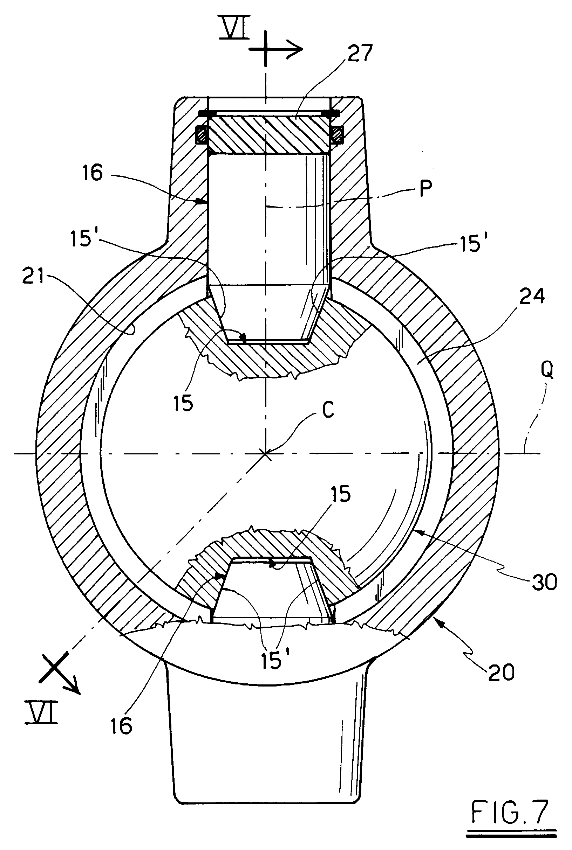

Figures 6 and 7 show a detailed constructional form of the first embodiment of the invention, in which the same reference numerals indicate equal or equivalent parts.

The bell structure 20 comprises a bearing housed as an exact fit within the bell structure cavity and having a cylindrical hollow surface which engages the spherical surface of the spherical component 30 to form a ball joint. The bearing is formed from two annular elements 24 extending about the spherical component 30 to the right and left of its equatorial plane, perpendicular to the axes A and B. Said elements 24 have an outer surface seated as an exact fit on a cylindrical inner surface of the cavity of the bell structure 20, and an inner surface of arched cross-section which mates with the spherical surface of the spherical component 30. The two elements 24 are maintained at rest and rigid with the bell structure 20 by an inner shoulder 25 and by a locking ring 26 positioned at the mouth 22.

In cross-section (in the plane perpendicular to the axis B - see Figure 7), the groove 15 comprises two lateral faces 15' converging towards the centre C, the second portion 16'' of the pin 16, namely that which engages the groove 15, being of frusto-conical shape with its generators converging at the same angle.

The seats 162 provided in the bell structure 20 are cylindrical and house the first portions 16' of the equally cylindrical pins 16. The outer end of the seats 162 is closed by a plug 27 locked in the seat by a locking ring arranged to prevent centrifugal axial movement of the pin 16 and escape of the lubricant grease positioned in the cavity of the bell structure 20. Advantageously, each pin 16 can be inserted into the respective seat 162 by interposing an antifriction bush (not shown in the figures), to facilitate rotation of the pin 16 about its axis P.

The entire space enclosed within the cavity of the bell structure 20 and closed by the plugs 27 and by the bellows cover 23 is advantageously filled with lubricant grease covering all the surfaces involved in the mutual sliding movements of the joint. This region is hermetically sealed and consequently lubrication of these parts lasts in practice for the entire life of the joint without any need for occasional attention.

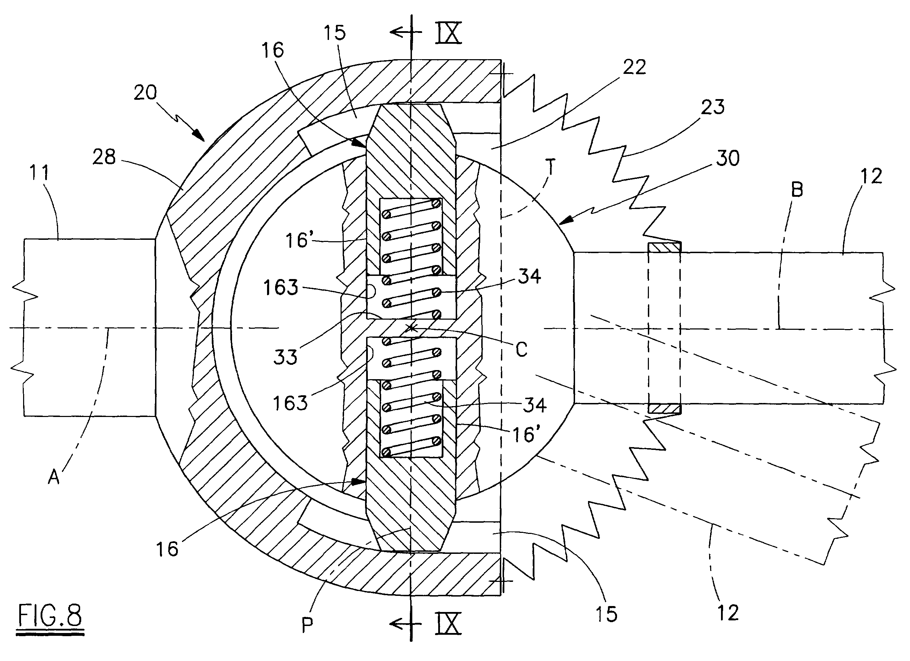

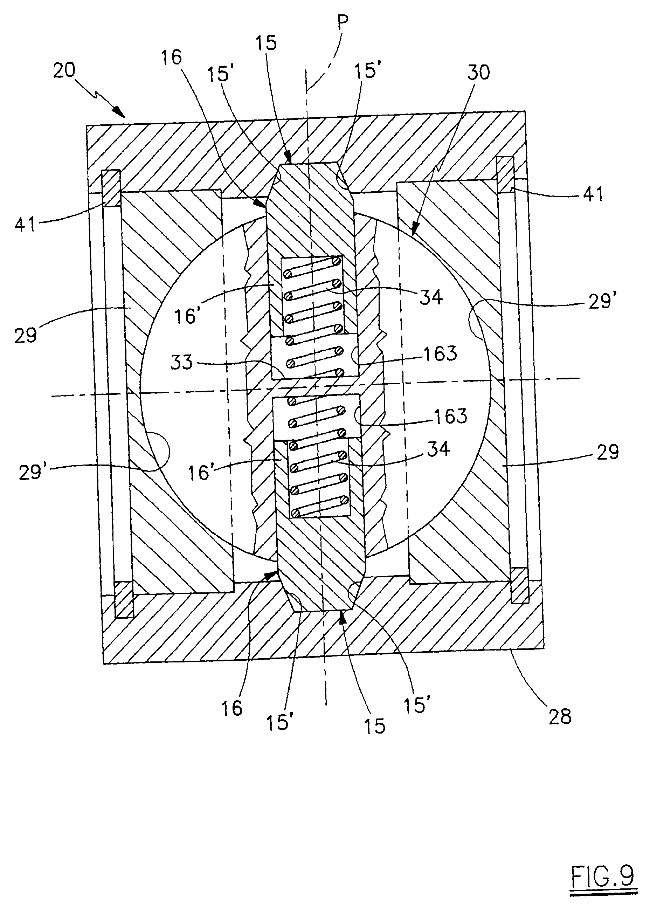

Figures 8 and 9 show schematically a second embodiment of the invention in which the same reference numerals indicate parts equal or equivalent to the first embodiment.

The two grooves 15 are here provided in the bell structure 20, namely in that inner surface facing the other part 30, and have their longitudinal axis extending in a plane passing through the axis A of the shaft 11, to which the bell structure 20 is connected.

The two pins 16 are carried and rigidly rotated by the spherical component 30 and are aligned along the axis P passing through the centre C of the joint. Each pin 16 comprises a first portion 16' having its cylindrical surface inserted as an exact fit, with slight clearance, into a corresponding radial cylindrical seat 163 provided in the spherical component 30. The two seats 163 are aligned along the same diameter and are separated from each other by an intermediate baffle 33 integral with the spherical component 30. The depth of the seats 163 is such as to completely house the pins 16 to the extent that their outer end also lies within the seat. The two pins 16 are urged outwards from the seat 163 by two springs 34 precompressed between the baffle 33 and the inner end of the pins 16.

In cross-section (in the plane perpendicular to the axis A - see Figure 9), the groove 15 comprises two lateral faces 15' diverging towards the centre C, and likewise the second portion 16'' of the pin 16, namely that which engages the groove 15, is of frusto-conical shape with its generators converging at the same angle. Consequently, again in cross-section, the engagement surface between the groove and the pin (surface of contact between one of the faces 15' and the portion 16'') is convergingly inclined towards that end of the pin 16 inserted into the groove 15. The pin 16 is urged towards the groove 15 by the spring 34, said inclination being determined such as to urge the pin 16 out of engagement with the groove 15, by overcoming the thrust of the spring means, when the torque transmitted between the two shafts 11 and 12 exceeds a predetermined limiting value, so representing a limiting device for the transmitted torque.

The bell structure 20 comprises a hollow body 28 having an overall cylindrical inner surface, the axis R of which is perpendicular to the axis A of the shaft 11 connected to it. The cavity of the hollow body 28 houses two bearings 29 in the form of circular plates lying perpendicular to the axis R and closing the ends of the body 28. On those sides facing the spherical component 30, the two bearings have two concave surfaces 29' of spherical cap shape which mate with the spherical surface of the component 30. The two bearings 29 are kept pressed against the spherical component 30, on one side and the other thereof, by two abutment rings 41 inserted into the inner surface of the body 28.

The two grooves 15 are provided in the cylindrical inner surface of the hollow body 28 in a plane perpendicular to the axis R of said cylindrical surface in an intermediate position along the axial length of the body 28. The axis A lies in this plane and also cuts the axis R at a right angle thereto. The axis R passes through the centre C and is perpendicular to the axial plane in which the grooves 15 lie.

The body 28 and the bearings 29 are cut distant from the centre C along a plane T perpendicular to the axis A, this cut determining the bell mouth 22 within which the shaft 12 moves. Because of said cut, the cylindrical surface of the body 28 and bearings 29 extends through an angle of less than 360 degrees but greater than 180 degrees. The spherical component 30 is therefore constrained to the bearings 29 in the manner of a ball hinge, these being secured to the hollow body 28, as said angle is greater than 180 degrees. The mouth 22 is shaped to enable the spherical component 30 to be inserted into the hollow body 28.

Again in this case the mouth 22 is closed by an elastic cover 23 in the form of an elastomeric bellows, which is connected both to the hollow body 28 and to the shaft 12, and is able to vary its shape to adapt to different angles of inclination between the axes A and B.

The entire space enclosed within the cavity of the body 28 and closed by the bearings 29 and by the bellows cover 23 is advantageously filled with lubricant grease covering all the surfaces involved in the mutual sliding movements of the joint. This region is hermetically sealed and consequently lubrication of these parts lasts in practice for the entire life of the joint without any need for occasional attention.

In operation, on rotating one of the shafts, for example the shaft 11 (drive shaft), the joint behaves in a manner similar to the first embodiment, and in particular the shaft 11 rigidly rotates the axial grooves 15 which rotatably drag the pins 16 engaged in them, to rotate the spherical component 30 and its shaft 12 (driven shaft).

The axis B of the shaft 12 can be inclined at an angle to the axis A of the shaft 11, these axes intersecting at the point C (as shown by dashed and dotted lines in Figure 1). In this case, during rotation of the shaft 11 about its axis A, the shaft 12 rotates about its axis B, which maintains its spatial position. This is enabled in that the spherical component 30 can swivel relative to the bell structure 20 both about the axis P of the pins 16 and about the axis R of the hollow body 28. Besides rotating about the axis A, the pins 16 also slide along the grooves 15 to an extent corresponding to the inclination angle between the axes A and B.

During rotation of the shaft 11, the pins 16 constantly engage the respective grooves 15 to transmit to them the torque which they receive from the shaft 11.

The pins can be of different shape than that shown, and in particular spherical. Likewise the groove 15 can have a cross-section conforming to the curved surface of such pins, and hence arched.

Numerous modifications of a practical and applicational nature can be made to the invention, but without leaving the scope of the inventive idea as claimed hereinafter.

## Claims

1. A mechanical joint for variable angle power transmission, comprising a first shaft (11) and a second shaft (12) the axes (A and B) of which intersect at the geometrical centre (C) of the joint, characterised by comprising:
two joint parts (20 and 30) rigidly connected to a respective shaft (11, 12) and coupled together in such a manner as to define a ball joint with its centre at the point of intersection (C) of the axes (A, B) of the two shafts (11, 12), to enable one shaft to swivel relative to the other;
at least one groove (15) provided in that surface of one (30, 20) of the two joint parts which faces the other part (20, 30), and having its longitudinal axis extending in a plane passing through the axis (B, A) of the shaft (12, 11) to which the joint part (30, 20) is connected;
at least one pin (16) carried and rigidly rotated by the other (20, 30) of the two joint parts and engaging said groove (15) to oblige the two shafts (A, B) to rotate together;
said pin (16) being able to slide longitudinally within the groove (15), and said joint parts (20, 30) being able to swivel one relative to the other about the axis (P) of the pin (16).

2. A joint as claimed in claim 1, characterised by comprising two said pins (16) aligned along the same axis (P) passing through the centre (C) of the joint and engaging two respective grooves (15) positioned in the same axial plane.

3. A joint as claimed in claim 1, characterised by comprising a spherical component (30) defining one of the joint parts and connected rigidly to one (12) of the shafts, and a bell structure (20) defining the other joint part connected rigidly to the other shaft (11) and having a hollow seat to engage the outer surface of the spherical component (30) in such a manner as to define said ball joint.

4. A joint as claimed in claim 1, characterised in that the pin (16) comprises a first portion (16') inserted as an exact fit into a corresponding seat (162, 163) provided in the respective joint part (20, 30), the outer surface of said first portion 16' being a surface of revolution having its axis passing through the centre (C) of the joint.

5. A joint as claimed in claim 1, characterised in that, in cross-section, the engagement surface between the groove (15) and the pin (16) is convergingly inclined towards that end of the pin (16) inserted into the groove (15), the pin (16) being urged towards the groove (15) by spring means (34), said inclination being such as to urge the pin (16) out of engagement with the groove (15), by overcoming the thrust of the spring means (34), when the transmitted torque exceeds a predetermined limiting value.

6. A joint as claimed in claim 3, characterised in that said bell structure (20) comprises a mouth (22) centered on the axis (A) of the shaft (11) connected to the bell structure (20), and a bearing (24, 29) housed as an exact fit within the cavity of the bell structure (20) and having a cylindrical hollow surface which engages the spherical surface of the spherical component (30) to form a ball joint.
